# EUROPEAN PATENT APPLICATION

(11) **EP 4 786 778 A1**
(43) Date of publication of application: **05.08.2026**
(21) Application number: 25155076.0
(22) Date of filing: 30.01.2025
(51) Int. Cl.: F02M 21/02, F02P 23/02

(54) **HYDROGEN INTERNAL COMBUSTION ENGINE**

(71) Applicant: Nederlandse Organisatie voor toegepast- natuurwetenschappelijk onderzoek TNO, 2595 DA 's-Gravenhage (NL)
(72) Inventor: SEYKENS, Xander Lambertus Jacobus, 2595 DA 's-Gravenhage (NL); DOOSJE, Erik, 2595 DA 's-Gravenhage (NL); VAN GOMPEL, Petrus Henricus Cornelis, 2595 DA 's-Gravenhage (NL); WILLEMS, Robbert Christian, 2595 DA 's-Gravenhage (NL)
(74) Representative: V.O.

(57) **Abstract**

A hydrogen internal combustion engine (100) comprises one or more combustion units (10). Each combustion unit (10) includes a combustion chamber (11) configured to receive a mixture of hydrogen (H2) and oxygen containing gas (O2). An intake channel (12c) with an intake mechanism (12v) allows the oxygen containing gas to enter the combustion chamber (11). A compression mechanism (13) compresses the chamber volume, after which a fuel injector (14) injects hydrogen under pressure into the compressed volume. Combustion (CB) of the compressed hydrogen-oxygen mixture causes the chamber volume to expand, driving the compression mechanism (13). An exhaust channel (15c) with an exhaust mechanism (15v) allows discharge of the resulting combustion product (H2O). A catalytic ignition assembly (18) with catalytic material (C) promotes ignition (IG) of the compressed hydrogen-oxygen mixture to initiate combustion. This configuration may enable autoignition of hydrogen without requiring conventional ignition systems like spark plugs or pilot fuel.

## Description

### TECHNICAL FIELD AND BACKGROUND

The present disclosure relates to internal combustion engines, and more particularly to compression ignition engines configured to operate with hydrogen as a fuel.

With increasing focus on reducing greenhouse gas emissions, hydrogen is emerging as a promising alternative fuel for internal combustion engines, offering the potential for zero carbon dioxide emissions during operation. High-pressure direct injection (HPDI) technology represents an advanced approach for hydrogen combustion engines, where hydrogen is injected directly into the combustion chamber near the end of the compression stroke.

However, initiating and controlling the combustion of hydrogen in compression ignition engines presents significant technical challenges. Unlike conventional hydrocarbon fuels, hydrogen requires substantially higher temperatures for autoignition under typical engine operating conditions. This characteristic often necessitates either extremely high compression ratios, which can stress engine components, or auxiliary ignition systems that add complexity and may compromise the zero-emission benefits of hydrogen fuel.

Various approaches have been developed to address these challenges, including dual-fuel systems utilizing pilot fuels, modified engine designs, and alternative ignition strategies. However, existing solutions often involve trade-offs between operational complexity, system efficiency, and emissions performance. In particular, solutions requiring additional fuels or complex ignition systems can increase system costs, maintenance requirements, and potentially compromise the environmental benefits of hydrogen-powered engines.

There remains a need for a hydrogen internal combustion engine that can reliably initiate and control combustion while maintaining system simplicity and preserving the zero-emission advantages of hydrogen fuel. Such a solution should ideally be compatible with existing engine architectures and manufacturing processes while enabling efficient hydrogen combustion without requiring complex auxiliary systems or additional fuels.

### SUMMARY

Aspects of the present invention can be embodied as a hydrogen internal combustion engine with one or more combustion units. Each combustion unit comprises a combustion chamber configured to receive hydrogen and oxygen containing gas (typically air) which may form a mixture in the combustion chamber. An intake channel with an intake mechanism is configured to allow the oxygen containing gas to enter into a volume of the combustion chamber. A compression mechanism is configured to compress the volume of the combustion chamber. A fuel injector is configured to inject the hydrogen under pressure into the compressed volume of the combustion chamber. Combustion of the compressed mixture of hydrogen and oxygen containing gas is configured to cause the volume of the combustion chamber to expand, driving the compression mechanism. An exhaust channel with an exhaust mechanism is configured to allow a combustion product, resulting from the combustion, to be discharged from the combustion chamber.

Advantageously, a catalytic ignition assembly comprising a catalytic material is configured to promote ignition of the compressed mixture of hydrogen and oxygen containing gas in the combustion chamber for initiating the combustion. Without being bound by theory, the catalytic material may promote hydrogen ignition by lowering the activation energy required for the hydrogen-oxygen reaction. According to preferred embodiments, described herein, the inventors find that optimal ignition may be further facilitated when the catalytic material is arranged within specific distances and configurations relative to the fuel injection points.

By configuring the fuel injector to flow hydrogen along and/or against regions of the catalytic ignition assembly with catalytic material, contact between the hydrogen fuel and catalytic surface may be optimized, promoting efficient ignition. By arranging the catalytic material on inner walls facing the combustion chamber, ignition may be initiated inside the combustion chamber where the mixture of oxygen with hydrogen may be optimized, in particular by the specific configuration of the fuel injector and/or catalytic ignition assembly.

By limiting the surface area covered by catalytic material, the design may achieve cost-effective implementation while maintaining ignition effectiveness. By arranging the catalytic material relatively close to the fuel injector, ignition may be initiated relatively early after the injection, e.g. before the entire chamber is filled with hydrogen. By arranging the catalytic material in a ring-shaped area surrounding the fuel injector's position, uniform interaction with the injected hydrogen regardless of injection direction may be ensured.

By incorporating wall segments that protrude into the combustion chamber or form an ignition cavity around the injection manifold, optimized zones for catalytic interaction may be created. By utilizing an injection manifold with multiple injection ports, precise control over hydrogen distribution within the combustion chamber may be enabled. By injecting the fuel at an oblique angle relative to the injector axis, hydrogen distribution may be optimized while maintaining effective interaction with catalytic surfaces, in particular those surrounding the fuel injector. By arranging wall segments to intersect with part of the expanding hydrogen jet, controlled interaction with part of the fuel flow may be enhanced while maintaining overall flow distribution patterns. By allowing the central part of the hydrogen jet to extend freely while limiting intersection ignition control with efficient fuel distribution may be facilitated.

By incorporating transverse wall segments arranged perpendicular to the hydrogen jet, direct impingement and redirection of fuel flow may be provided for enhanced catalytic interaction. By utilizing sloped wall segments aligned with the jet direction, a smooth fuel flow along catalytic surfaces may be promoted while minimizing the driving away of oxygen. By implementing curved wall segments, circulating flow patterns may be facilitated that enhance mixing, residence time, and catalytic interaction.

By implementing the combustion units as cylinders with reciprocating pistons, the design can maintain compatibility with traditional engine manufacturing processes while incorporating advanced catalytic ignition technology. These and other features as described herein may create a synergistic system that enables efficient hydrogen combustion through catalytic ignition, eliminating the need for conventional ignition systems while maintaining reliable operation and optimal combustion characteristics.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1 illustrates a hydrogen internal combustion engine;
FIGs 2A - 2D illustrate operation of the engine in different phases;
FIGs 3A-3C illustrate increasing zoom levels of the combustion unit with further details of the catalytic ignition assembly in relation to the fuel injection;
FIGs 4A - 4C illustrates embodiments with preferred aspects of the catalytic ignition assembly;
FIG 5A illustrates a fuel injector with a catalytic ignition assembly;
FIG 5B illustrates an injection manifold of the fuel injector with surrounding wall segments of the catalytic ignition assembly protruding into the combustion chamber;
FIG 5C illustrates the injection manifold retracted further back into an access port for the fuel injector into the combustion chamber;
FIGs 6 - 9 illustrate CFD simulations for different designs of the catalytic ignition assembly.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

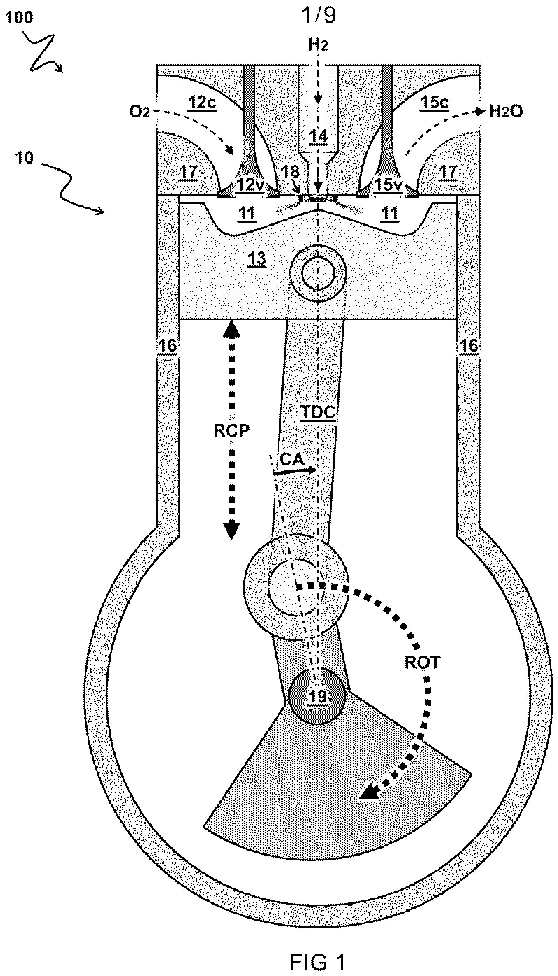

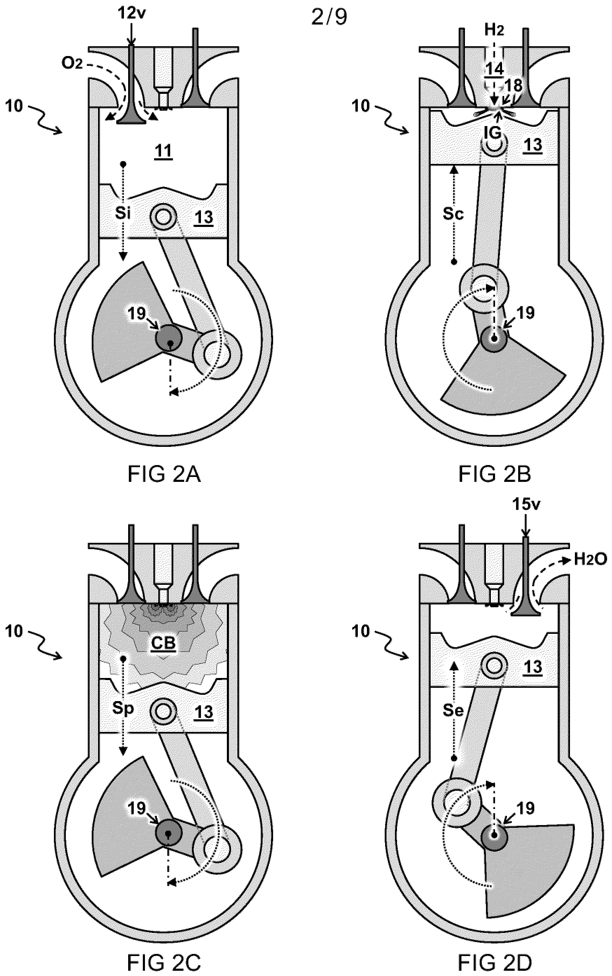

FIG 1 illustrates a hydrogen internal combustion engine 100. FIGs 2A - 2D illustrate operation of the engine 100 in different phases.

As described herein, the engine 100 may comprise one or more combustion units 10. Each combustion unit 10 comprises a combustion chamber 11. The combustion chamber 11 is configured to receive (gaseous) hydrogen (H₂) as well as an oxygen (O₂) containing gas. The hydrogen and oxygen are preferably mixed inside the combustion chamber 11, i.e. not premixed. Typically, the oxygen containing gas is air, which may be received from an external surroundings of the engine 100. Also other oxygen containing gas may be used. For example, Argon or other oxygen carrying gas may be supplied from a dedicated storage tank and is preferably recycled / recirculated.

The hydrogen gas may be received from a fuel source, e.g. tank. For example, hydrogen may be stored under high pressure (typically at least 350, up to 700 bar, or higher) in specialized tanks. These tanks are usually made of carbon fiber composite materials with polymer liners to prevent hydrogen leakage while keeping weight down. Also other forms of hydrogen storage may be envisaged such as liquid hydrogen, or metal hydride storage.

Each combustion unit 10 comprises an intake channel 12c with an intake mechanism 12v configured to allow the oxygen containing gas to enter into a volume of the combustion chamber 11. This typically occurs during an intake phase Si of the combustion unit 10. Each combustion unit 10 further comprises a compression mechanism 13 configured to compress the volume of the combustion chamber 11. This typically occurs during a compression phase Sc of the combustion unit 10. For a high-pressure direct injection (HPDI) engine, as described herein, typical compression ratios are between 14:1 - 22:1, or higher.

Compression of gas, e.g. air, contained in the combustion chamber 11 causes the temperature to increase to facilitate the ignition. Without being bound by theory, and assuming an ideal adiabatic compression process, the temperature at the end of the compression stroke T_{TDC} may be approximated using the formula T_{TDC} = T_{IVC}·r^{(γ-1)}, where "T_{IVC}" is the temperature when the position of the piston when it reaches its highest point in the cylinder (Top Dead Center, TDC); "T_{IVC}" is the initial temperature at the time of intake valve closure (IVC); "r" is the compression ratio; and γ is the specific heat ratio (e.g. 1.4 for ideal diatomic gases like hydrogen-air). Using T_{IVC} = 293 K (room temperature), and a compression ratio r=18, the temperature at the end of the compression stroke T_{TDC} ≈ 772 K. This may be below the threshold for the autoignition of hydrogen (e.g. 858 K at standard pressure). However, the presence of a catalytic material as described herein, e.g. catalytic surface, may further enable or facilitate ignition.

Without being bound by theory, catalytic material may lower the activation energy required for the H₂ oxidation reaction (H₂ + O₂ → H₂O), allowing this reaction to occur at TDC temperatures. For example, catalytic materials such as platinum may facilitate hydrogen oxidation at temperatures as low as 423 K (150°C). The H₂ + O₂ reaction is highly exothermic, and the heat released from this initial catalytic reaction can thus increase the local temperature around the catalytic material to levels exceeding the autoignition temperature of hydrogen. This localized temperature increase may then promote the ignition of subsequently injected hydrogen, including hydrogen that does not directly contact the catalytic material. Thus, the catalytic material may create localized high-temperature zones that initiate and sustain the combustion process throughout the combustion chamber.

Each combustion unit 10 comprises a fuel injector 14 configured to inject the hydrogen under pressure into the compressed volume of the combustion chamber 11. Since the gas (air) in the combustion chamber 11 is already under pressure, the pressure at which the hydrogen is injected needs to be even higher. For example, the hydrogen may be injected at pressures higher than 100 bar, preferably higher than 150 bar, more preferably higher than 200 bar, e.g. up to 300 bar, or even higher. Injection typically occurs at the end of the compression phase Sc, e.g. starting slightly before TDC and continuing thereafter. Typically the time relative to TDC may be expressed in the units of `Crankshaft Angle' (CA), which is the angle in degrees traveled by the crankshaft 18. For example, fuel injection may start before TDC (e.g. 30 to 10 CA before TDC), so that ignition of the hydrogen may occur around TDC, while hydrogen injection is continued (e.g. until 5 to 15 CA after TDC).

As described herein, the combustion unit 10 comprises a catalytic ignition assembly 18, wherein a catalytic material "C" is configured to promote ignition (IG) of the compressed mixture of hydrogen and oxygen containing gas in the combustion chamber 11 for initiating the combustion (CB). Suitable catalytic materials for igniting hydrogen are those that can facilitate the exothermic reaction of hydrogen with oxygen at relatively low temperatures. Suitable materials typically exhibit high catalytic activity, stability, and resistance to poisoning. Preferably, the catalytic material comprises platinum (Pt).

Also other or further catalytic materials may be used such as nickel (Ni), palladium (Pd), rhodium (Rh), iridium (Ir), cobalt oxides (Co₃O₄), manganese oxides (MnO₂), or iron oxides (Fe₂O₃). Additionally, mixed metal oxides, such as perovskites (e.g., LaMnO₃) or cerium-based oxides (CeO₂), may also be employed to enhance catalytic performance under specific operating conditions.

Preferably, the catalytic material "C" is used in a form or structure designed to maximize its surface area, catalytic activity, and/or durability. This structure may form (part of) the catalytic ignition assembly 18, as described herein. For example, the platinum (and/or other catalytic material) may be provided as a thin layer or fine particles deposited on a porous support material, such as ceramic or metal, to enhance the exposed catalytic surface area. Alternatively, the platinum may be formed as a platinum-coated mesh or gauze to ensure uniform distribution and high thermal resistance. In some embodiments, platinum nanoparticles supported on high-surface-area materials, such as activated carbon, alumina, or silica, may be used to further improve catalytic efficiency while minimizing the quantity of platinum required.

The catalytic ignition assembly 18 is preferably positioned in proximity to the combustion chamber 11 to enable rapid and reliable ignition of the compressed hydrogen-oxygen mixture. In some embodiments, the catalytic material "C" may be thermally integrated with a heat management system to maintain optimal operating temperatures for catalytic ignition. In other or further embodiments, the catalytic material may be combined with secondary materials, such as stabilizing oxides or alloying elements, to enhance resistance to high-temperature degradation and poisoning by contaminants in the gas mixture.

The combustion of the compressed mixture of hydrogen and oxygen containing gas is configured to cause the volume of the combustion chamber 11 to expand. The expanding gas may drive the compression mechanism 13 during a power phase Sp of the combustion unit 10. After combustion, an exhaust channel 15c with an exhaust mechanism 15v is configured to allow a combustion product, resulting from the combustion CB, to be discharged from the combustion chamber 11. This may occur during an exhaust phase Se of the combustion unit 10. In a hydrogen based engine, the combustion product typically comprises water (H₂O), e.g. water vapor in air.

Typically, the engine 100 may comprise multiple combustion units 10, e.g. two, four, or six. In a preferred embodiment, as shown, the hydrogen internal combustion engine 100 is a reciprocating engine. For example, the compression mechanism 13 is operatively connected to a crankshaft 19, wherein a reciprocating motion (RCP) of the compression mechanism 13 is configured to drive a rotational motion (ROT) of the crankshaft 19. In a reciprocating engine, the combustion units may also be referred to as cylinders. For example, the engine may have one, two, three, four, five, six, or more cylinders.

In some embodiments, each combustion unit 10 comprises a respective cylinder. Each cylinder may comprise a cylinder wall 16 defining a lateral boundary of the combustion chamber 11 and a cylinder head 17 may form an upper boundary of the combustion chamber 11. In the embodiment shown, the compression mechanism 13 comprises a piston forming a lower boundary of the combustion chamber 11. The piston is configured to move reciprocally within the cylinder, along the cylinder wall 16, towards and away from the cylinder head 17, defining a variable volume of the combustion chamber 11.

In some embodiments, e.g. as illustrated in FIGs 2A-2D, the hydrogen internal combustion engine 100 may be a four stroke engine, wherein different phases of the combustion unit correspond to different strokes of the piston. As illustrated in FIG 2A, the intake mechanism 12v typically comprises an intake valve operatively associated with the intake channel 12c for allowing the oxygen-containing gas (typically air) to enter the combustion chamber during the intake phase Si. For example, air is sucked into the combustion chamber 11 by the retreating piston. During the compression phase Sc, e.g. as illustrated in FIG 2B, the hydrogen-air mixture may be compressed by pushing the piston inwards. As illustrated in FIG 2C, combustion (CB) of the compressed hydrogen-air mixture may cause the volume of the gas in the combustion chamber 11 to expand pushing the piston outward. As illustrated in FIG 2D, the exhaust mechanism 15v typically comprises an exhaust valve operatively associated with the exhaust channel 15c for discharging the combustion product during the exhaust phase Se. For example, water (vapor) may be pushed out of the combustion chamber 11 by the compression mechanism 13 such as the piston.

Alternative to a four stroke engine, the hydrogen internal combustion engine 100 may also be configured as a two stroke engine. In a two stroke engine, the intake and exhaust phases may be combined with the compression and power phases, such that the engine completes a full cycle in only two strokes of the piston or rotor. Alternatively, other engine cycle designs may be envisaged, such as six stroke engines or split-cycle engines, wherein the combustion and compression phases may occur in separate cylinders or combustion units. These alternative configurations may also incorporate the catalytic material "C" to promote ignition IG of the compressed mixture of hydrogen and oxygen containing gas, in particular in preferred configurations and/or at preferred positions relative to the fuel injector 14 as described herein.

Alternative to a reciprocating engine, also other embodiments may be envisaged, wherein a catalytic material "C" is provided to promote ignition IG of the compressed mixture of hydrogen and oxygen containing gas in the combustion chamber 11 for initiating the combustion CB. In one alternative embodiment (not shown), the hydrogen internal combustion engine may be embodied as a rotary engine. In a rotary engine, each combustion unit may be formed by a housing enclosing a rotor, and the compression mechanism may comprise a rotor configured to rotate within the housing, defining variable volumes of the combustion chamber as the rotor moves through sequential phases, including the intake phase, compression phase, power phase, and exhaust phase. The intake mechanism may comprise an intake port configured to allow the oxygen-containing gas to enter the combustion chamber during the intake phase. The exhaust mechanism may comprise an exhaust port configured to discharge the combustion product during the exhaust phase. Also any other compatible engine type may be used in combination with the present teachings, such as a free-piston engine, a turbine-based engine, et cetera.

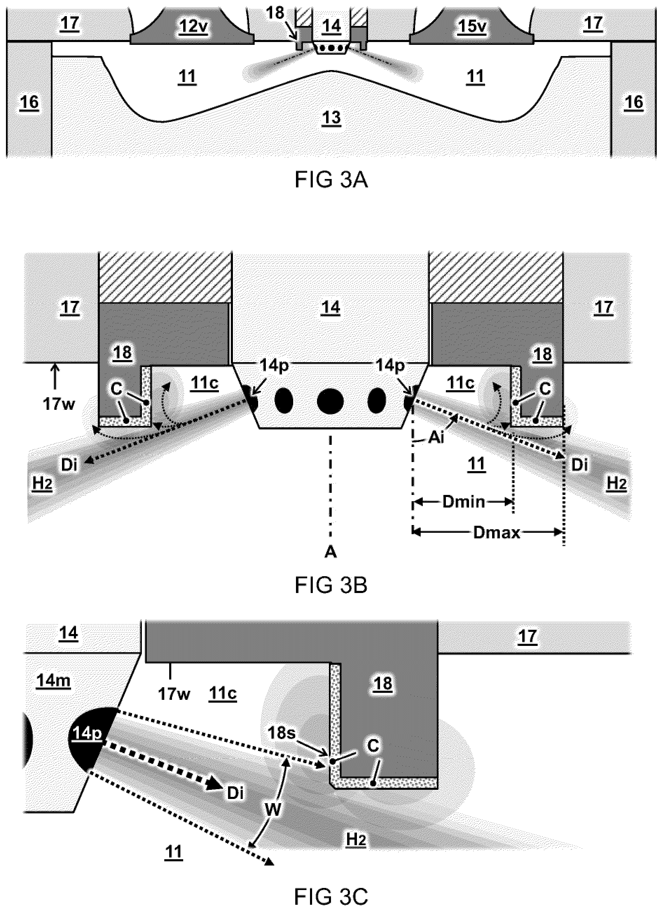

FIGs 3A-3C illustrate increasing zoom levels of the combustion unit with further details of the catalytic ignition assembly 18 in relation to the fuel injection.

In a preferred embodiment, the fuel injector 14 is configured to flow the hydrogen along and/or against a region of the catalytic ignition assembly 18 provided with the catalytic material "C". Most preferably, the catalytic material "C" is arranged on an inner wall facing into the combustion chamber 11. For example, the catalytic material "C" may be arranged on a wall of the catalytic ignition assembly 18, may facing into the combustion chamber 11. Alternatively, or in addition, the catalytic material "C" may be arranged on an inner wall of the cylinder head 17 forming an upper boundary of the combustion chamber 11. In principle, it is also possible to cover the entire inner wall of the combustion chamber 11 with catalytic material. For example, the entire cylinder head 17 may be coated by the catalytic material "C". Alternatively, or in addition, catalytic material "C" may be provided to cover part of, or the entire, compression mechanism 13, e.g. lower wall of the combustion chamber 11 formed by the piston. Alternatively, or in addition, catalytic material "C" may be provided on the lateral walls of the combustion chamber 11, e.g. the inner cylinder walls 16. However, this may be relatively expensive, impractical, and/or cause uncontrolled ignition.

In one preferred embodiment, a relatively small area is covered by the catalytic material "C". For example, a surface area covered by the catalytic material "C" may be less than twenty square centimeters, preferably less than ten square centimeters, more preferably less than five square centimeter, e.g. down to one square centimeter, or less. This may also depend on the size of the engine. In relative terms, preferably only a small fraction of the internal chamber surface is covered by the catalytic material "C". For example, less than 30% of the surface area of an upper wall of the combustion chamber 11 (e.g. the cross-section area of the cylinder hole and/or area of cylinder head 17) is covered by the catalytic material "C", preferably less than 20%, more preferably less than 10%, e.g. down to 1%, or less.

In another or further preferred embodiment, the catalytic material "C" is arranged relatively close to where the hydrogen enters into the combustion chamber 11. By placing the catalytic material "C" relatively close to the point of entry, the hydrogen may come into contact with the catalytic material "C" relatively early after initiating the injection. This may provide more time to initiate the ignition, e.g. compared to placing the catalytic material "C" further away from the hydrogen point of entry. Furthermore, it may be advantageous that the ignition starts relatively early, in particular before the combustion chamber 11 is completely filled by the hydrogen. This may provide a more gradual and/or controlled combustion process, e.g. compared to a more explosive combustion process that could occur if the ignition is initiated too late when there is already much more hydrogen present in the combustion chamber 11. To avoid uncontrolled ignition, it may also be preferably to avoid catalytic material "C" at larger distances from the hydrogen point of entry.

In a preferred embodiment, the catalytic material "C" is arranged proximal to a respective injection port 14p of the fuel injector 14 injecting hydrogen into the combustion chamber 11. For example, at least some, preferably all, of the catalytic material "C" is arranged within a maximum distance Dmax from a closest injection port 14p, wherein the maximum distance Dmax is less than ten centimeter, preferably less than five centimeter, most preferably less than two centimeter, e.g. less than one centimeter, or less. This may also depend on the size of the engine. In relative terms, the maximum distance Dmax is less than a radius of the combustion chamber 11, e.g. less than 50%, preferably less than 20% of the radius, e.g. down to 5%, or less.

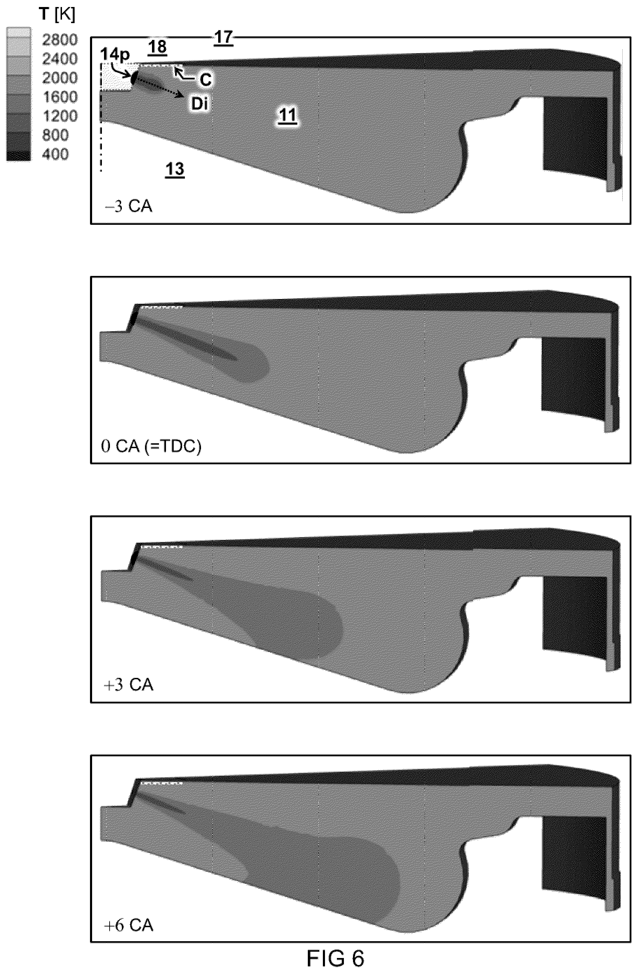

For example, in the simulations described with reference to FIGs 6 - 9, a ring shaped area, coated by catalytic material "C", with an outer diameter of 20 mm and an inner diameter of 10 mm was used with a surface area of about 2.5 cm². and maximum distance of around 1 cm. Of course, the present teachings are not limited to specific areas and/or distances. Alternatively, or in addition, there may be a preferred minimum distance Dmin from the nearest injection port 14p at which to place the closest catalytic material "C". This may prevent premature ignition and/or allow at least some room for the hydrogen gas to expand and/or heat up (from the surrounding compressed gas), before ignition may be initiated.

In some embodiments, the fuel injector 14 comprises an injection manifold 14m with one or more injection ports 14p (e.g. outlet openings) from which the hydrogen is injected into the combustion chamber 11. Accordingly, the catalytic material "C" may be arranged in front of one or more of the injection ports 14p. Preferably, the injection manifold 14m comprises at least two injection ports 14p, more preferably at least four injection ports 14p, most preferably at least six injection ports 14p, up to eight, ten, or more injection ports 14p. For example, the injection manifold 14m may typically comprise seven or nine injection ports 14p. Most preferably, the injection ports 14p are distributed evenly around a circumference of the injection manifold 14m so that the hydrogen may be evenly distributed into the combustion chamber 11. In a preferred embodiment, the catalytic material "C" is arranged in an area surrounding the fuel injector 14. For example, the catalytic material "C" may be arranged to cover a ring shaped area surrounding a position where the fuel injector 14 protrudes into the combustion chamber 11. The ring shaped area may be formed by a continuous ring of the catalytic material "C" or an intermittent ring shaped pattern, e.g. with the catalytic material "C" arranged exclusively directly in front of respective injection ports 14p.

Typically, the hydrogen may be injected (from each injection port 14p) along a principal injection direction Di, at a respective injection angle Ai with respect to an axial direction A of the fuel injector 14, and/or with respect to a normal vector of a wall segment 17w from which the fuel injector 14 protrudes into the combustion chamber 11. The axial direction A of the fuel injector 14 may also be referred to as the injector axis'. The principal injection direction Di, also referred to as the 'jet axis', may correspond to the (initial) average direction of the hydrogen as it leaves the injection ports 14p. The principal injection direction Di may correspond with the angle which an area of the respective injection port 14p is facing. Typically, the hydrogen may be injected as a jet or plume of expanding hydrogen gas. Preferably, the hydrogen from each of the injection ports 14p is injected at an oblique angle with respect to the surrounding wall. For example, the fuel injector 14 is configured to inject hydrogen in a conical spray pattern from the surrounding injection ports 14p (e.g. with the cone centered on the injection manifold 14m).

By directing the hydrogen flow at oblique injection angles Ai, rather than purely axially or radially, spatial distribution of the fuel within the compressed oxygen-containing gas may be optimized. For example, the respective injection angle Ai is between ten and eighty degrees (plane angle), preferably at least fifty degrees, more preferably or at least sixty degrees e.g. around seventy degrees, as shown. Using an injection angle Ai that has a relatively large radial component, the hydrogen may be quickly spread outward in the (compressed) combustion chamber 11. By providing the injection angle Ai with at least some axial component, the hydrogen may be directed better into the combustion chamber 11 rather than purely along the wall.

In a reciprocating engine, e.g. as shown, the fuel injector 14 and/or injection manifold 14m is typically arranged at an axial center of each respective cylinder. Accordingly, the hydrogen may be ejected evenly in all directions. The injection direction Di of the hydrogen flow may define a cone angle that is oriented at an oblique angle relative to both the axial direction A of the fuel injector 14 and the wall segment 17w of the cylinder head 17. In principle, the fuel injector 14 may also be placed elsewhere and/or provide a different spray pattern.

In some embodiments, the fuel injector 14 is configured to eject a respective jet of the hydrogen from a respective injection port 14p into the combustion chamber 11. The respective jet may have an expanding width "W" around its principal direction Di, e.g. as shown in FIG 3C. The jet may thus expand as the hydrogen spreads outward further from the injection ports 14p. In a preferred embodiment, e.g. as shown, the catalytic ignition assembly 18 comprises wall segment 18s arranged to intersect with part the hydrogen at an edge of the expanding width "W" of the jet so that the intersected part of the hydrogen is redirected by the wall segment 18s of the catalytic ignition assembly 18 to flow along and/or against the catalytic material "C".

By intersecting with part of the hydrogen jet, the intersected part flowing along and/or against the catalytic material "C" may be used to promote ignition through catalytic interaction, while a remaining part of the hydrogen jet continues to spread sufficiently filling the combustion chamber 11. In a preferred embodiment, a central part of the jet along the principal direction Di of the jet of hydrogen freely extends past any wall segment 18s of the catalytic ignition assembly 18. In other words, the principal direction Di is preferably free from any obstruction of the catalytic ignition assembly 18, so that a majority of the hydrogen may freely expand into the combustion chamber 11.

Preferably, the wall segment 18s of the catalytic ignition assembly 18 is arranged to intersect with and/or redirect less than 40% of the hydrogen in the (initial) jet expelled from the injection ports 14p, preferably less then than 20%, e.g. between 1% and 10%, or less. For example, a relatively small percentage of the hydrogen jet may impact against a respective wall segment 18s of the catalytic ignition assembly 18 and/or be redirected along the respective wall segment 18s.

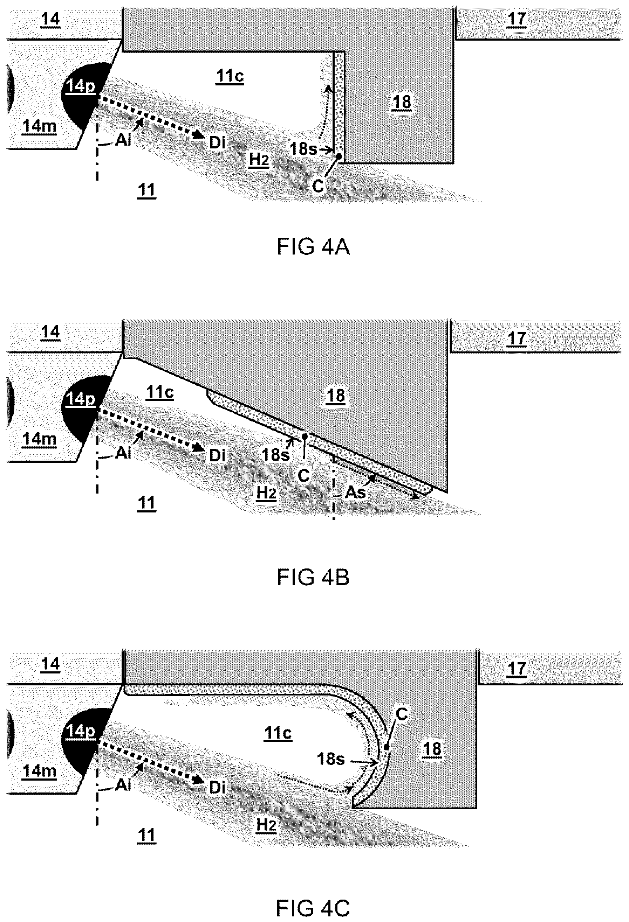

FIGs 4A - 4C illustrates embodiments with other or further preferred aspects of the catalytic ignition assembly 18. It will be understood that these may be combined with any of the preceding figures.

In some embodiments, e.g. as shown in FIG 4A, the catalytic ignition assembly 18 comprises a transverse wall segment arranged transverse to a principal direction Di of a jet of hydrogen ejected from a respective injection port 14p of the fuel injector 14 for receiving part of the a jet of hydrogen impacting the transverse wall segment 18s, and redirecting said impacting part towards and/or along the catalytic material "C". For example, the transverse wall segment is arranged at an angle of more than 45 degrees with respect to the principal direction Di of the jet. For example, a part of the hydrogen jet may be redirected into an ignition cavity 11c provided with the catalytic material "C". Advantageously, the hydrogen may have a relatively long residence time and/or high concentration and efficiently mix with oxygen (e.g. air) which may be present in the ignition cavity 11c prior to initiating the hydrogen injection.

In other or further embodiments, e.g. as shown in FIG 4B, the catalytic ignition assembly 18 comprises a sloped wall segment arranged along a principal direction Di of a jet of hydrogen ejected from a respective injection port 14p of the fuel injector 14 for receiving part of the a jet of hydrogen being guided along the catalytic material "C" arranged on the sloped wall segment. For example, the sloped wall segment is arranged at an angle of less than 45 degrees with respect to the principal direction Di of the jet, preferably less than 20 degrees, or even less than 10 degrees. The sloped wall segment may also be arranged substantially parallel to the principal direction Di of the jet, wherein the expanding width of the jet may intersect with the sloped wall segment. The sloped wall segment may be inclined at an angle with respect to the rest of the wall of the combustion chamber 11, e.g. the upper wall formed by the cylinder head 17.

In other or further embodiments, e.g. as shown in FIG 4C, the catalytic ignition assembly 18 comprises a curved wall segment cutting into part of the a jet of hydrogen, for redirecting said part of the jet along a curved path of the curved wall segment along the catalytic material "C". For example, the curved wall segment may cause part of the jet to be redirected back towards the fuel injector 14. This may cause a part the hydrogen gas to have a relatively long residence time and/or become more highly concentrated in a region with the catalytic material "C". For example, an ignition cavity 11c with the catalytic material "C" may be formed surrounding the injection manifold 14m, wherein hydrogen and oxygen (already present in the ignition cavity 11c) may be efficiently mixed by the back swirling part of the hydrogen jet.

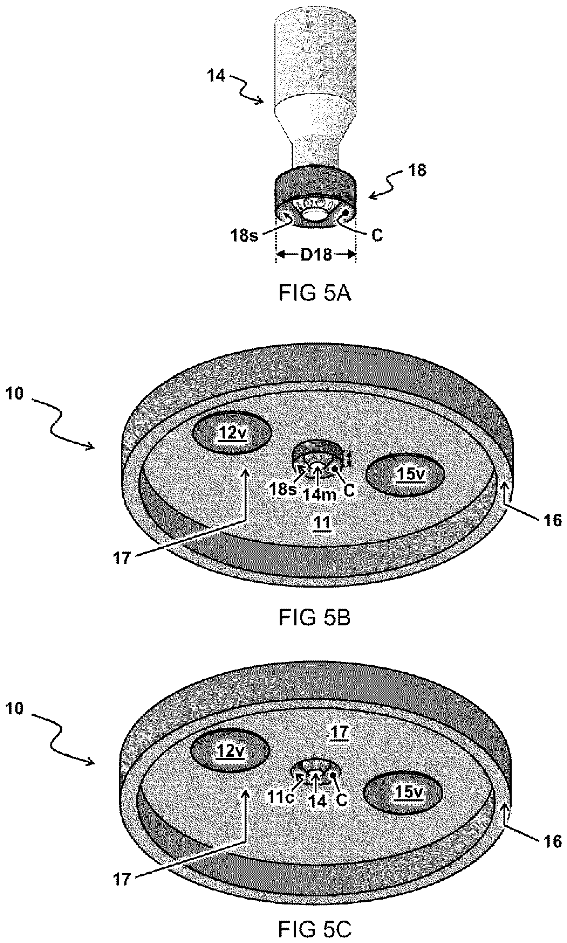

FIG 5A illustrates a perspective view of part of a fuel injector 14 with a catalytic ignition assembly 18. FIG 5B illustrates an injection manifold 14m of the fuel injector 14 with surrounding wall segments 18s of the catalytic ignition assembly 18 protruding into the combustion chamber 11. FIG 5C illustrates the injection manifold 14m retracted further back into an access port for the fuel injector 14 into the combustion chamber 11;

In a preferred embodiment, as shown, the catalytic ignition assembly 18 is provided as a (separate or integrated) constructional element, e.g. sleeve, which may be arranged around the injection manifold 14m of the fuel injector 14. Advantageously, the injection manifold 14m with surrounding catalytic ignition assembly 18 may fit into an existing fuel injection port into the combustion chamber 11. For example, an outer diameter of the catalytic ignition assembly 18 may be less than five centimeter, preferably less than three centimeter, e.g. two centimeter, or less. Alternative to providing the catalytic ignition assembly 18 as a separate constructional element, the assembly may also be integrated with an inner wall of the combustion chamber 11. For example, the inner wall of the cylinder head 17 may be provided with a desired shape surrounding the injection manifold 14m and/or proved with catalytic material "C".

In some embodiments, e.g. as shown in FIG 5B, the catalytic ignition assembly 18 comprises a wall segment 18s protruding into the combustion chamber 11 to surround (at least part of) the injection manifold 14m. In other or further embodiments, e.g. as shown in FIG 5C, the injection manifold 14m is arranged in an ignition cavity 11c formed by a surrounding wall segment 18s of the catalytic ignition assembly 18. The ignition cavity 11c may form a concave (sub)volume of the combustion chamber 11. The catalytic material "C" is provided to cover at least part of the wall segment 18s and/or ignition cavity 11c. Preferably, the sub volume formed by the ignition cavity 11c is relatively small, e.g. less than 10 cm², preferably less than 5 cm², more preferably less than 1 cm², e.g. down to 0.1 cm², or less.

FIGs 6 - 9 illustrate Computational Fluid Dynamics (CFD) simulations for different designs of the catalytic ignition assembly 18. For each of the designs, the figures provide cross-sectional temperature distributions highlighting the ignition process and subsequent flame development at different instances of crank angle (CA) timing during the engine cycle: -3 CA, 0 CA (corresponding to top dead center, TDC), +3 CA, and +6 CA. The catalytic material (C) was modeled with platinum properties.

FIG 6 shows the CFD simulation results for a first design, which features a flat catalytic surface integrated into catalytic ignition assembly 18 forms as a sleeve around the fuel injector. The direction Di of the jet of hydrogen may be observed leaving a respective injection port 14p. At -3 CA, no significant temperature rise is observed near the catalytic surface. By TDC (0 CA), a limited reaction is detected but fails to develop into sustained ignition. At +3 CA and +6 CA, the temperature field remains at low temperature, indicating a lack of ignition and flame propagation, likely due to insufficient interaction between the hydrogen jet and the flat catalytic surface.

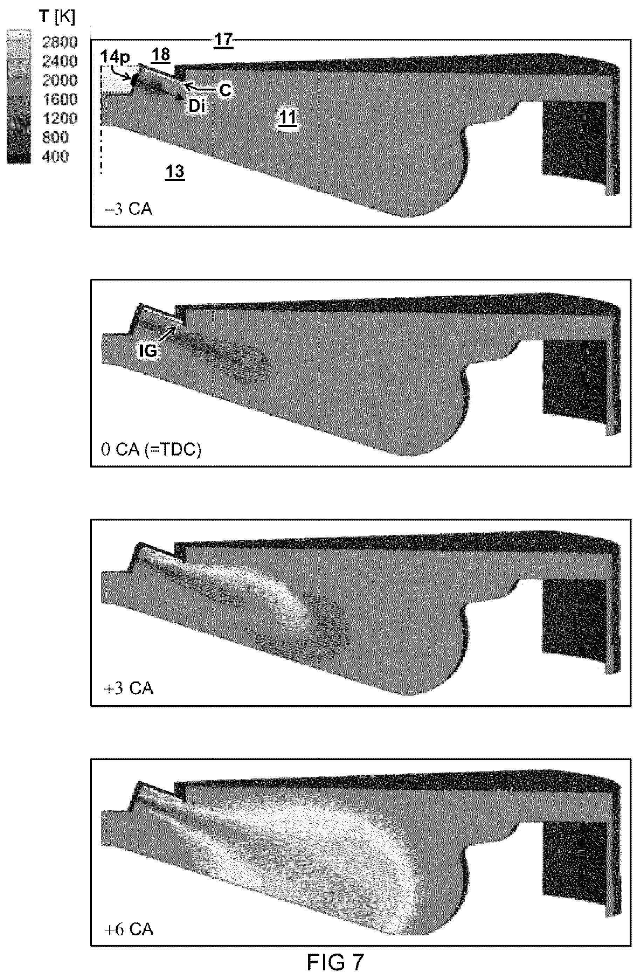

FIG 7 depicts the CFD simulation results for second design, which incorporates the preferred properties of an inclined catalytic surface, in this case aligned parallel to the hydrogen jet's axis. At -3 CA, localized temperature increases near the catalytic surface suggest the initiation of surface reactions. By TDC (0 CA), ignition "IG" occurs along the inclined surface, with the reaction front propagating along the hydrogen jet. At +3 CA and +6 CA, a stable flame develops, extending towards the jet tip and wrapping back towards the injector, demonstrating effective ignition and combustion.

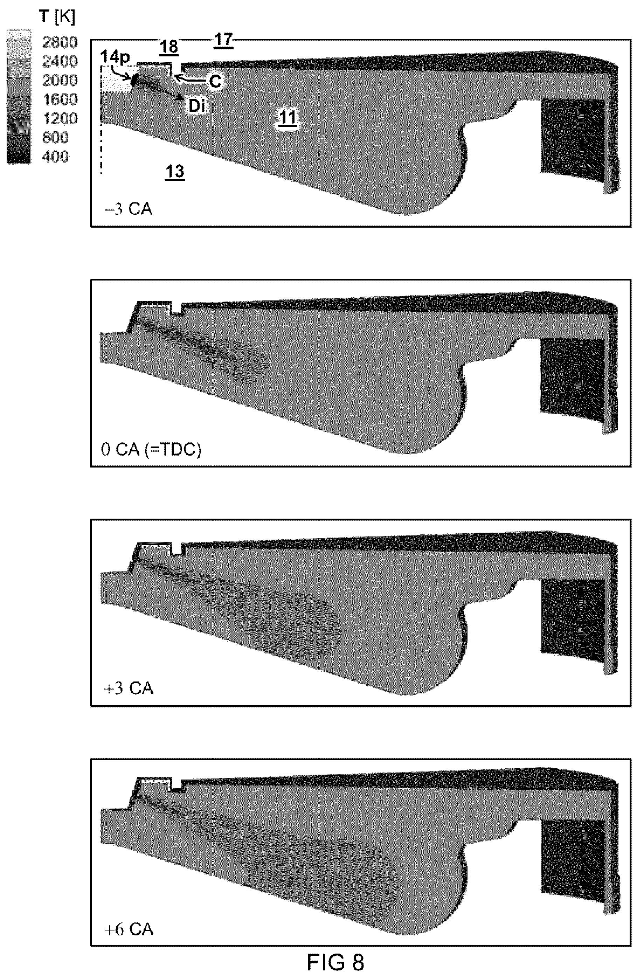

FIG 8 illustrates the CFD simulation results for a third design, characterized by a ridge configuration positioned moderately close to the hydrogen jet. Similar to the first design, no significant ignition is observed at -3 CA or TDC (0 CA). By +3 CA and +6 CA, partial reactions are present, but they fail to result in sustained ignition, likely due to insufficient proximity and interaction with the high-velocity hydrogen jet.

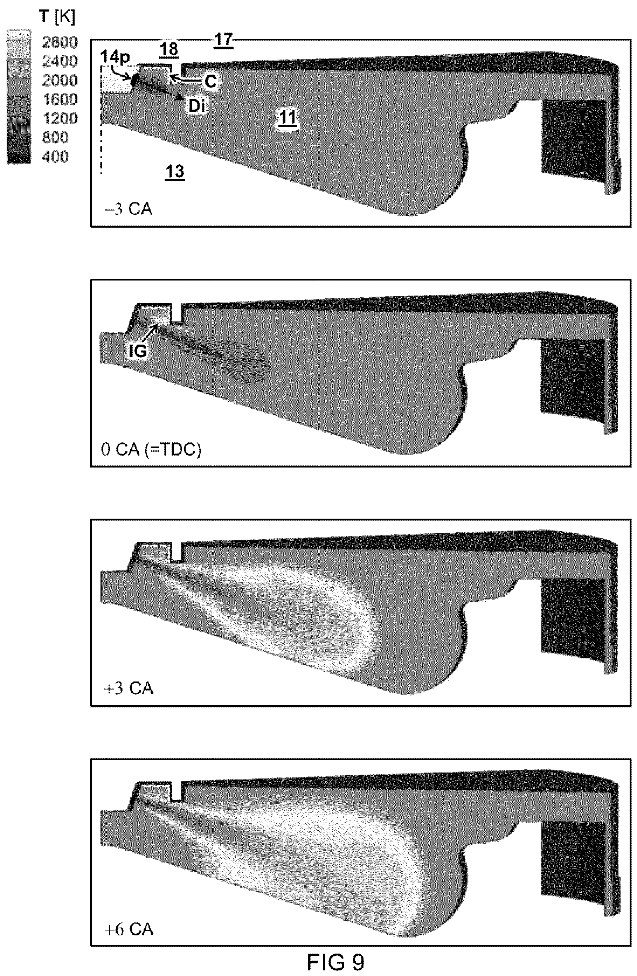

FIG 9 presents the CFD simulation results for a fourth design, featuring a preferred embodiment with a deeper ridge (compared to FIG 8) placed in more direct contact with the hydrogen jet, e.g. cutting into a side lobe of the jet. At -3 CA, localized temperature increases are observed, indicating the initiation of catalytic reactions. By TDC (0 CA), ignition "IG" is observed near the ridge, with the reaction front progressing along the jet axis. At +3 CA and +6 CA, a fully developed flame is visible, with rapid combustion spreading along the hydrogen jet and achieving a stable jet, highlighting the effectiveness of this design for catalytic ignition.

For the purpose of clarity and a concise description, features are described herein as part of the same or separate embodiments, however, it will be appreciated that the scope of the invention may include embodiments having combinations of all or some of the features described. For example, while embodiments were shown for particular configurations and positioning of the catalytic material relative to the hydrogen, also alternative ways may be envisaged by those skilled in the art having the benefit of the present disclosure for achieving a similar function and result. For example, catalytic material may be placed in various other or further positions and configurations to optimize interaction with both hydrogen and oxygen. The various elements of the embodiments as discussed and shown offer certain advantages, such as autoignition of hydrogen in a high-pressure direct injection engine, without requiring any other fuel gas for ignition or ignition means such as a spark plug. Of course, it is to be appreciated that any one of the above embodiments or processes may be combined with one or more other embodiments or processes to provide even further improvements in finding and matching designs and advantages. It is appreciated that this disclosure offers particular advantages to compression ignited hydrogen internal combustion engines, and in general can be applied for any similar application.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. A hydrogen internal combustion engine (100) with one or more combustion units (10), each combustion unit (10) comprising:
a combustion chamber (11) configured to receive a mixture of hydrogen (H2) and oxygen containing gas (O2);
an intake channel (12c) with an intake mechanism (12v) configured to allow the oxygen containing gas (O2) to enter into a volume of the combustion chamber (11);
a compression mechanism (13) configured to compress the volume of the combustion chamber (11);
a fuel injector (14) configured to inject the hydrogen (H2) under pressure into the compressed volume of the combustion chamber (11);
wherein combustion (CB) of the compressed mixture of hydrogen (H2) and oxygen containing gas (O2) is configured to cause the volume of the combustion chamber (11) to expand, driving the compression mechanism (13);
an exhaust channel (15c) with an exhaust mechanism (15v) configured to allow a combustion product (H2O), resulting from the combustion (CB), to be discharged from the combustion chamber (11); and
a catalytic ignition assembly (18) comprising a catalytic material (C) configured to promote ignition (IG) of the compressed mixture of hydrogen (H2) and oxygen containing gas (O2) in the combustion chamber (11) for initiating the combustion (CB).

2. The hydrogen internal combustion engine (100) according to claim 1, wherein the fuel injector (14) is configured to flow the hydrogen (H2) along and/or against a region of the catalytic ignition assembly (18) provided with the catalytic material (C).

3. The hydrogen internal combustion engine (100) according to any of the preceding claims, wherein the catalytic material (C) is arranged on an inner wall facing into the combustion chamber (11).

4. The hydrogen internal combustion engine (100) according to any of the preceding claims, wherein a surface area covered by the catalytic material (C) is less than ten square centimeters, preferably less than five square centimeter.

5. The hydrogen internal combustion engine (100) according to any of the preceding claims, wherein the catalytic material (C) is arranged in a ring shaped area surrounding a position where the fuel injector (14) protrudes into the combustion chamber (11).

6. The hydrogen internal combustion engine (100) according to any of the preceding claims, wherein the catalytic ignition assembly (18) comprises a wall segment (18s) protruding into the combustion chamber (11) to surround the injection manifold (14m) and/or the injection manifold (14m) is arranged in an ignition cavity (11c) formed by a surrounding wall segment (18s) of the catalytic ignition assembly (18), wherein the ignition cavity (11c) forms a concave sub volume of the combustion chamber (11), wherein the catalytic material (C) is provided to cover at least part of the wall segment (18s) and/or ignition cavity (11c).

7. The hydrogen internal combustion engine (100) according to any of the preceding claims, wherein the fuel injector (14) comprises an injection manifold (14m) with one or more injection ports (14p) from which the hydrogen (H2) is injected into the combustion chamber (11).

8. The hydrogen internal combustion engine (100) according to the preceding claim, wherein the catalytic material (C) is arranged proximal to a respective injection port (14p) of the fuel injector (14) injecting hydrogen (H2) into the combustion chamber (11), wherein all of the catalytic material (C) is arranged within a maximum distance (Dmax) from a closest injection port (14p), wherein the maximum distance (Dmax) is less than five centimeter, preferably less than two centimeter.

9. The hydrogen internal combustion engine (100) according to any of the two preceding claims, wherein from each injection port (14p), the hydrogen (H2) is injected along a principal injection direction (Di), at a respective injection angle (Ai) with respect to an axial direction (A) of the fuel injector (14), wherein the respective injection angle (Ai) is between fifty and eighty degrees.

10. The hydrogen internal combustion engine (100) according to any of the preceding claims, wherein the fuel injector (14) is configured to eject a respective jet of the hydrogen (H2) from a respective injection port (14p) into the combustion chamber (11), wherein the respective jet has an expanding width (W) around its principal direction (Di), wherein the jet expands as the hydrogen (H2) spreads outward further from the injection ports (14p), wherein the catalytic ignition assembly (18) comprises wall segment (18s) arranged to intersect with part the hydrogen (H2) at an edge of the expanding width (W) of the jet so that the intersected part of the hydrogen (H2) is redirected by the wall segment (18s) of the catalytic ignition assembly (18) to flow along and/or against the catalytic material (C),

11. The hydrogen internal combustion engine (100) according to the preceding claim, wherein a central part of the jet along the principal direction (Di) of the jet of hydrogen (H2) freely extends past any wall segment (18s) of the catalytic ignition assembly (18), wherein the wall segment (18s) of the catalytic ignition assembly (18) is arranged to intersect with and/or redirect less than 20% of the hydrogen (H2) in the jet expelled from the injection ports (14p).

12. The hydrogen internal combustion engine (100) according to any of the preceding claims, wherein the catalytic ignition assembly (18) comprises a transverse wall segment arranged transverse to a principal direction (Di) of a jet of hydrogen (H2) ejected from a respective injection port (14p) of the fuel injector (14) for receiving part of the a jet of hydrogen (H2) impacting the transverse wall segment (18s), and redirecting said impacting part towards and/or along the catalytic material (C).

13. The hydrogen internal combustion engine (100) according to any of the preceding claims, wherein the catalytic ignition assembly (18) comprises a sloped wall segment arranged along a principal direction (Di) of a jet of hydrogen (H2) ejected from a respective injection port (14p) of the fuel injector (14) for receiving part of the a jet of hydrogen (H2) being guided along the catalytic material (C) arranged on the sloped wall segment.

14. The hydrogen internal combustion engine (100) according to any of the preceding claims, wherein the catalytic ignition assembly (18) comprises a curved wall segment cutting into part of the a jet of hydrogen (H2), for redirecting said part of the jet along a curved path of the curved wall segment along the catalytic material (C).

15. The hydrogen internal combustion engine (100) according to any of the preceding claims, wherein each combustion unit (10) comprises a respective cylinder, wherein each cylinder comprises:
a cylinder wall (16) defining a lateral boundary of the combustion chamber (11);
a cylinder head (17) forming an upper boundary of the combustion chamber (11);
wherein the compression mechanism (13) comprises a piston forming a lower boundary of the combustion chamber (11),
wherein the piston is configured to move to move reciprocally within the cylinder, along the cylinder wall (16), towards and away from the cylinder head (17), defining a variable volume of the combustion chamber (11).
